# EUROPEAN PATENT APPLICATION

(11) **EP 4 637 041 A1**
(43) Date of publication of application: **22.10.2025**
(21) Application number: 24896159.1
(22) Date of filing: 30.10.2024
(51) Int. Cl.: H04B 5/77

(54) **PASSIVE NEAR-FIELD COMMUNICATION DEVICE, METHOD AND APPARATUS**

(30) Priority: 27.11.2023 CN 202311607547
(71) Applicant: Advanced Nova Technologies (Singapore) Holding Pte. Ltd., Singapore 189773 (SG)
(72) Inventor: DAI, Yuhua, Hangzhou, Zhejiang 310000 (CN)
(74) Representative: Winter, Brandl - Partnerschaft mbB
(86) International application number: PCT/CN2024/128541
(87) International publication number: WO 2025/113068

(57) **Abstract**

The present disclosure provides passive near field communication devices, methods, and apparatuses. The devices include a wake-up tuning coil, a communication antenna coil, and an NFC chip. A resonance point of the wake-up tuning coil is the same as a carrier frequency band of a card reader device. The communication antenna coil is connected to the NFC chip in series, and is tuned to the carrier frequency band of the card reader device.

## Description

This application claims priority to Chinese Patent Application No. 2023116075473, filed with the China National Intellectual Property Administration on November 27, 2023 and entitled "PASSIVE NEAR FIELD COMMUNICATION DEVICES, METHODS, AND APPARATUSES", which is incorporated herein by reference in its entirety.

### TECHNICAL FIELD

The present disclosure relates to the field of communication technologies, and in particular, to passive near field communication devices, methods, and apparatuses.

### BACKGROUND

Currently, payments based on Near Field Communication (NFC) mainly cover bus/metro payments and some bank card-based payments. NFC at a device end mainly operates in an active mode to identify bus/subway cards, some bank cards, and cards emulated on mobile phones, and perform deduction to complete offline payments. However, for scenarios with small and micro merchants unable guarantee 24/7 power supply, even battery-powered payment devices may eventually run out of power. To ensure that communication and payments can still be completed in such scenarios, a payment device needs to operate in a passive mode. In addition, some mobile phones are not compatible with a card emulation mode of an independent system. For users of these mobile phones, a payment device also needs to operate in the passive mode.

Therefore, how to complete payment by an NFC payment device in cases without power supply is an urgent technical problem to be solved at present.

### SUMMARY

An objective of the present disclosure is to provide passive near field communication devices to solve at least a technical problem in a related technology that it is difficult to complete payment by an NFC payment device in cases without power supply.

According to one aspect of the embodiments of the present disclosure, the following is provided:
a passive near field communication device, including a wake-up tuning coil, a communication antenna coil, and an NFC chip, where
the wake-up tuning coil is a bare coil, and a resonance point of the wake-up tuning coil is the same as a carrier frequency band of a card reader device; and
the communication antenna coil is connected to the NFC chip in series, and is tuned to the carrier frequency band of the card reader device.

In some example embodiments, a location of the wake-up tuning coil is determined based on a location of an NFC antenna included in the card reader device.

In some example embodiments, the wake-up tuning coil includes a first wake-up tuning coil; and
the first wake-up tuning coil and the communication antenna coil are co-planar or located on parallel planes, and induced magnetic fields within the two coils overlap.

In some example embodiments, the first wake-up tuning coil is located in a middle portion or a lower half of the passive near field communication device, and is configured to be coupled with an antenna in a middle portion or a lower half of the card reader device.

In some example embodiments, the first wake-up tuning coil has a rectangular or oblate shape, and is configured to be coupled with a rectangular or oblate antenna of the card reader device.

In some example embodiments, the wake-up tuning coil includes a second wake-up tuning coil; and
the second wake-up tuning coil is located on an upper side of the passive near field communication device, and is configured to be coupled with an antenna on an upper side of the card reader device.

In some example embodiments, the second wake-up tuning coil has a strip shape, and is configured to be coupled with a strip-shaped antenna on the upper side of the card reader device.

According to another aspect of the embodiments of the present disclosure, a passive near field communication method is further provided, including:
receiving a low power card detection carrier of a card reader device by using a wake-up tuning coil, where a resonance point of the wake-up tuning coil is the same as a carrier frequency band of the card reader device;
generating, by using the wake-up tuning coil, a wake-up induced magnetic field when the low power card detection carrier of the card reader device is received, where the induced magnetic field is used to disable a low power card detection mode of the card reader device;
receiving a full power card detection carrier of the card reader device by using a communication antenna coil, where the communication antenna coil is connected to an NFC chip in series, and is tuned to the carrier frequency band of the card reader device; and
generating, by using the communication antenna coil, a communication induced magnetic field when the full power card detection carrier of the card reader device is received, and communicating with the card reader device based on the communication induced magnetic field.

In some example embodiments, the receiving a low power card detection carrier of a card reader device by using a wake-up tuning coil includes:
receiving the low power card detection carrier of the card reader device by using a first wake-up tuning coil, where the first wake-up tuning coil and the communication antenna coil are co-planar or located on parallel planes, and induced magnetic fields within the two coils overlap.

In some example embodiments, the first wake-up tuning coil is located in a middle portion or a lower half of a passive near field communication device, and is configured to be coupled with an antenna in a middle portion or a lower half of the card reader device.

In some example embodiments, the first wake-up tuning coil has the same shape as a rectangular or oblate antenna of the card reader device.

In some example embodiments, the receiving a low power card detection carrier of a card reader device by using a wake-up tuning coil includes:
receiving, by using the second wake-up tuning coil, a low power card detection carrier sent by an antenna on an upper side of the card reader device, where the second wake-up tuning coil is located on an upper side of the passive near field communication device.

In some example embodiments, the second wake-up tuning coil has the same shape as a strip-shaped antenna on an upper side of the card reader device.

According to another aspect of the embodiments of the present disclosure, a passive near field communication apparatus is further provided, including:
a first receiving module, configured to receive a low power card detection carrier of a card reader device by using a wake-up tuning coil, where a resonance point of the wake-up tuning coil is the same as a carrier frequency band of the card reader device;
a wake-up module, configured to generate, by using the wake-up tuning coil, a wake-up induced magnetic field when the low power card detection carrier of the card reader device is received, where the induced magnetic field is used to disable a low power card detection mode of the card reader device;
a second receiving module, configured to receive a full power card detection carrier of the card reader device by using a communication antenna coil, where the communication antenna coil is connected to an NFC chip in series, and is tuned to the carrier frequency band of the card reader device; and
a communication module, configured to generate, by using the communication antenna coil, a communication induced magnetic field when the full power card detection carrier of the card reader device is received, and communicate with the card reader device based on the communication induced magnetic field.

In some example embodiments, the first receiving module includes the following:
a first receiving unit, configured to receive the low power card detection carrier of the card reader device by using a first wake-up tuning coil, where the first wake-up tuning coil and the communication antenna coil are co-planar or located on parallel planes, and induced magnetic fields within the two coils overlap.

In some example embodiments, the first wake-up tuning coil is located in a middle portion or a lower half of a passive near field communication device, and is configured to be coupled with an antenna in a middle portion or a lower half of the card reader device.

In some example embodiments, the first wake-up tuning coil has the same shape as a rectangular or oblate antenna of the card reader device.

In some example embodiments, the first receiving module includes the following:
a second receiving unit, configured to receive, by using a second wake-up tuning coil, a low power card detection carrier sent by an antenna on an upper side of the card reader device, where the second wake-up tuning coil is located on an upper side of the passive near field communication device.

In some example embodiments, the second wake-up tuning coil has the same shape as a strip-shaped antenna on an upper side of the card reader device.

According to another aspect of the embodiments of the present disclosure, a computing device is further provided. The computing device includes a processor adapted to implement instructions and a storage device, the storage device stores a plurality of instructions, and the instructions are adapted to be loaded and executed by the processor to perform any one of the passive near field communication methods described above.

According to another aspect of the embodiments of the present disclosure, a computer-readable storage medium is further provided. The computer-readable storage medium stores a computer program, and the computer program is configured to perform any one of the passive near field communication methods described above.

According to another aspect of the embodiments of the present disclosure, a computer program product is further provided, where the computer program product includes a computer program, and when executed by a processor, the computer program implements any one of the passive near field communication methods described above.

The following further describes the technical solutions in the present disclosure in detail with reference to accompanying drawings and embodiments.

### BRIEF DESCRIPTION OF DRAWINGS

The following accompanying drawings are merely intended to illustrate and explain the present disclosure, and are not intended to limit the scope of the present disclosure.
FIG. 1 is a structural diagram of a passive near field communication device according to some embodiments of the present disclosure;
FIG. 2 is a schematic structural diagram of coils of a passive near field communication device according to some optional embodiments of the present disclosure;
FIG. 3 is a flowchart of a passive near field communication method according to some embodiments of the present disclosure;
FIG. 4 is a structural diagram of a passive near field communication apparatus according to some embodiments of the present disclosure; and
FIG. 5 is a schematic structural diagram of a computing device according to some embodiments of the present disclosure.

### DESCRIPTION OF EMBODIMENTS

The following further describes this application in detail by using the accompanying drawings and embodiments. Features and advantages of this application will become clearer from these descriptions.

The special term "example" used here means "used as an example, an embodiment, or an illustration". Any embodiment described here as an "example" is not to be construed as superior to or better than other embodiments. Although various aspects of the embodiments are shown in the accompanying drawings, the accompanying drawings are not necessarily drawn to scale, unless otherwise specifically indicated.

In addition, the following described technical features related to different implementations of this application can be mutually combined, provided that they do not conflict with each other.

To better describe the embodiments of the present invention, professional terms involved in the embodiments of the present invention are explained as follows:
NFC: a short-range high-frequency radio communication technology.
NFC active mode: In the active mode, an NFC terminal device may serve as a card reader, and emit a radio frequency field to identify and read/write passive NFC device information.
NFC passive mode (card emulation): In this mode, a terminal device supporting NFC is emulated as a card. The terminal device responds passively only when another device emits a radio frequency field, so that information can be read from /written to the terminal device.
Low power card detection (LPCD) mode: To reduce power consumption in detection of an NFC slave device, a mobile phone enters a low power mode a specified period of time after unlocking, and then card detection also enters the LPCD mode.
Normal card detection mode: To improve an NFC rate and success rate, a mobile phone maintains full power card detection, namely, the normal card detection mode, for a period of time after unlocking. In both the LPCD and the normal card detection mode described above, a mobile phone sends sine waves at 13.56 MHz, but a sending time and an amplitude of the sine waves vary with the respective mode. In both modes, energy is coupled by using a coil.

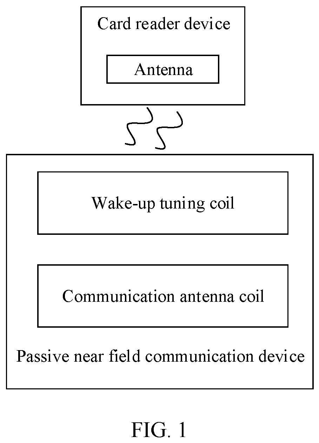

In the embodiments, a passive near field communication device is provided. FIG. 1 is a structural diagram of a passive near field communication device according to some embodiments of the present disclosure. As shown in FIG. 1, the passive near field communication device includes the following:
a wake-up tuning coil and a communication antenna coil.

The passive near field communication device further includes an NFC chip (not shown in FIG. 1). The NFC chip may receive, by using a communication antenna, an instruction sent by a card reader device, and execute a read/write operation according to the instruction.

The wake-up tuning coil is a bare coil, and a resonance point of the wake-up tuning coil is the same as a carrier frequency band of the card reader device.

The bare coil can be an LC oscillator circuit that is not connected to the NFC chip in series. The card reader device can be a mobile phone with an NFC function.

The communication antenna coil is connected to the NFC chip in series, and is tuned to the carrier frequency band of the card reader device. "Connected ... in series" indicates that there is a connection between the communication antenna coil and the NFC chip.

The resonance point of the wake-up tuning coil and the carrier frequency band of the card reader device can be 13.56 MHz.

The wake-up tuning coil is configured to be coupled with an antenna of the card reader device when the antenna of the card reader device approaches, and disable a low power card detection mode of the card reader device.

After the low power card detection mode of the card reader device is disabled, the card reader device may enter a full power card detection mode.

The card reader device may approach the wake-up tuning coil in the low power card detection mode, so as to induce the wake-up tuning coil to generate an induced magnetic field, thereby waking up the card reader device and switching it to the full power card detection mode.

The communication antenna coil is configured to communicate with the card reader device in the full power card detection mode of the card reader device.

Load modulation is performed by the NFC chip on the communication antenna coil, so as to complete the communication with the card reader device.

In the embodiments of the present disclosure, the wake-up tuning coil is a bare coil, and the resonance point of the wake-up tuning coil is the same as the carrier frequency band of the card reader device; the communication antenna coil is connected to the NFC chip in series, and is tuned to the carrier frequency band of the card reader device; the wake-up tuning coil is configured to be coupled with the antenna of the card reader device when the antenna of the card reader device approaches, and disable the low power card detection mode of the card reader device; and the communication antenna coil is configured to communicate with the card reader device in the full power card detection mode of the card reader device. This can solve a technical problem in a related technology that an NFC payment device cannot complete payment in cases without power supply. The wake-up tuning coil (a bare coil) is disposed in the passive near field communication device to wake up the card reader device in the low power card detection mode, and then full power communication is performed with the card reader device by using the communication antenna coil. In this way, payment can be completed in cases without power supply. Moreover, a coupling effect of the card reader device in the low power mode can be improved.

In some example embodiments, the wake-up tuning coil includes a first wake-up tuning coil.

The first wake-up tuning coil and the communication antenna coil are co-planar or located on parallel planes, and induced magnetic fields within the two coils overlap.

Preferably, the first wake-up tuning coil and the communication antenna coil can be embedded in a parallel and encircled arrangement within the passive near field communication device.

According to the foregoing embodiments, the first wake-up tuning coil and the communication antenna coil are co-planar or located on parallel planes, and the induced magnetic fields within the two coils overlap. As such, the passive near field communication device can immediately communicate with the card reader device once it wakes up the card reader device, and in addition, a technical effect of space saving can be further achieved.

In some example embodiments, a location of the wake-up tuning coil is determined based on a location of an NFC antenna included in the card reader device. In practice, the passive near field communication device can be, e.g., an NFC tag card (referred to as an NFC card for short below), and a mobile phone can be used as the card reader device. Therefore, a position of the wake-up tuning coil in the NFC card can be set based on a position at which the NFC antenna is placed in the mobile phone. According to a usage habit of a user, to read the NFC card by using the mobile phone, the user generally places an upper part of the mobile phone in proximity to the NFC card. According to this usage habit, for a mobile phone whose NFC antenna is located on an upper side of the mobile phone, the wake-up tuning coil in the NFC card can be disposed on an upper side of the NFC card; and for a mobile phone whose NFC antenna is located in a middle part of the mobile phone, the wake-up tuning coil in the NFC card can be disposed in a middle portion or a lower half of the NFC card. For the two models of mobile phones to achieve a good card reading effect, one wake-up tuning coil can be disposed on the upper side of the NFC card, and another wake-up tuning coil can be disposed in the middle portion or the lower half of the NFC card.

By disposing the wake-up tuning coils in the NFC card as described above, when the user places the mobile phone close to the NFC card, the position of the wake-up tuning coil in the NFC card is aligned with the position of the NFC antenna in the mobile phone, so that the NFC card can more easily receive an electromagnetic signal sent by the mobile phone in the LPCD mode, and an electromagnetic signal sent by the NFC card based on the received electromagnetic signal can be more easily received by the card reader device, thereby increasing a probability that the card reader device can be switched to the normal card detection mode, and further improving a success rate of NFC identification.

In some example embodiments, the first wake-up tuning coil is located in a middle portion or a lower half of the passive near field communication device, and is configured to be coupled with an antenna in a middle portion or a lower half of the card reader device.

For example, the card reader device can be a mainstream Android mobile phone, and for the card reader device of this type, an antenna is usually disposed at a position of the middle portion or the lower half of the device.

According to the foregoing embodiments, the first wake-up tuning coil is located in the middle portion or the lower half of the passive near field communication device, and is configured to be coupled with the antenna in the middle portion or the lower half of the card reader device, thereby improving convenience in coupling the passive near field communication device with a mainstream card reader device.

In some example embodiments, the first wake-up tuning coil has a rectangular or oblate shape, and is configured to be coupled with a rectangular or oblate antenna of the card reader device.

For example, the card reader device can be an Android mobile phone, and for the card reader device of this type, an antenna is usually rectangular or oblate.

According to the foregoing embodiments, the first wake-up tuning coil has the rectangular or oblate shape, and is configured to be coupled with the rectangular or oblate antenna of the card reader device, thereby improving a coupling effect between the passive near field communication device and a mainstream card reader device.

In some example embodiments, the wake-up tuning coil includes a second wake-up tuning coil.

The second wake-up tuning coil is located on an upper side of the passive near field communication device, and is configured to be coupled with an antenna on an upper side of the card reader device.

For example, the card reader device can be an iOS mobile phone, and for the card reader device of this type, an antenna is usually disposed on an upper side of the device.

According to the foregoing embodiments, the second wake-up tuning coil is located on the upper side of the passive near field communication device, and is configured to be coupled with the antenna on the upper side of the card reader device, thereby improving convenience in coupling the passive near field communication device with a card reader device of an iOS type.

In some example embodiments, the second wake-up tuning coil has a strip shape, and is configured to be coupled with a strip-shaped antenna on the upper side of the card reader device.

For example, the card reader device can be an iOS mobile phone, and for the card reader device of this type, an antenna is usually strip-shaped for a card reader device of this type.

According to the foregoing embodiments, the second wake-up tuning coil has the strip shape, and is configured to be coupled with the strip-shaped antenna of the card reader device, thereby improving a coupling effect between the passive near field communication device and a card reader device of the iOS type.

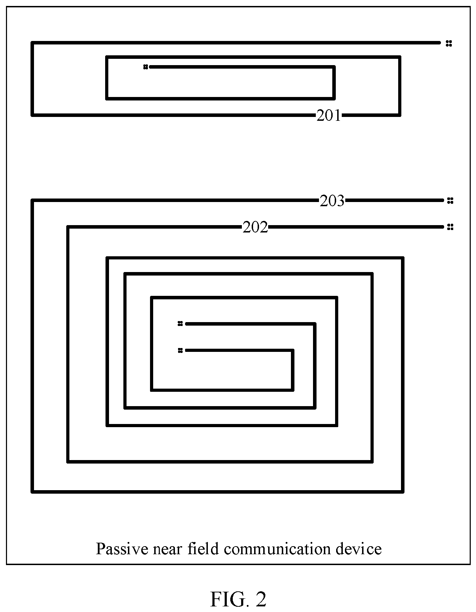

FIG. 2 is a schematic structural diagram of coils of a passive near field communication device according to some optional embodiments of the present disclosure. As shown in FIG. 2, the coils include a first wake-up tuning coil 201, a second wake-up tuning coil 202, and a communication antenna coil 203.

The rectangular second wake-up tuning coil 202 and the communication antenna coil 203 can be embedded in a parallel and encircled arrangement within a lower half of the passive near field communication device. The strip-shaped first wake-up tuning coil 201 is disposed on an upper side of the passive near field communication device.

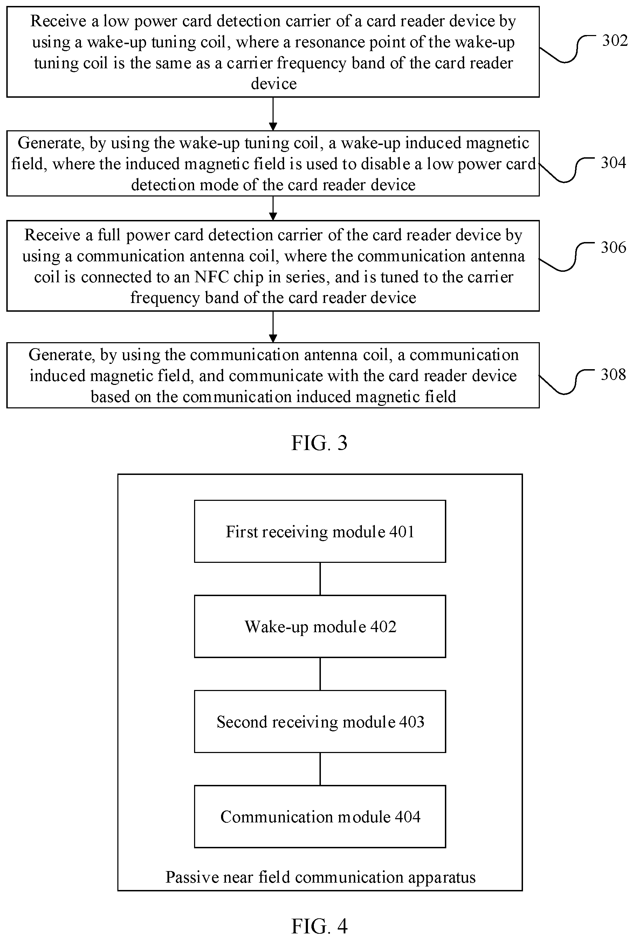

According to another aspect of some embodiments of the present disclosure, a passive near field communication method is further provided. FIG. 3 is a flowchart of the passive near field communication method according to some embodiments of the present disclosure. As shown in FIG. 3, the method includes the following:
Step 302: Receive a low power card detection carrier of a card reader device by using a wake-up tuning coil, where a resonance point of the wake-up tuning coil is the same as a carrier frequency band of the card reader device.

The wake-up tuning coil is a bare coil, and the bare coil can be an LC oscillator circuit that is not connected to the NFC chip in series. The card reader device can be a mobile phone with an NFC function.

Step 304: Generate, by using the wake-up tuning coil, a wake-up induced magnetic field based on the low power card detection carrier, where wake-up induced magnetic field is used to disable a low power card detection mode of the card reader device.

The resonance point of the wake-up tuning coil and the carrier frequency band of the card reader device can be 13.56 MHz. After the low power card detection mode of the card reader device is disabled, the card reader device may enter a full power card detection mode.

Step 306: Receive a full power card detection carrier of the card reader device by using a communication antenna coil, where the communication antenna coil is connected to an NFC chip in series, and is tuned to the carrier frequency band of the card reader device.

The card reader device may approach the wake-up tuning coil in the low power card detection mode, so as to induce the wake-up tuning coil to generate an induced magnetic field, thereby waking up the full power card detection mode of the card reader device.

Step 308: Generate, by using the communication antenna coil, a communication induced magnetic field in response to the full power card detection carrier, and communicate with the card reader device based on the communication induced magnetic field.

Load modulation is performed by the NFC chip on the communication antenna coil, so as to complete the communication with the card reader device.

Specifically, the communication antenna coil provides a full power card detection carrier signal including a read instruction to the NFC chip. The NFC chip acquires, in response to the read instruction, data stored in the NFC chip, and performs load modulation on the communication antenna coil based on the data, so that the communication antenna coil generates the communication induced magnetic field. The card reader device receives the data by receiving the communication induced magnetic field. In addition, referring to FIG. 2, if the card reader device is an iOS mobile phone, signals can be transmitted between an antenna of the card reader device and the communication antenna coil 203 by using the first wake-up tuning coil 201 after the card reader device enters the full power card detection mode, thereby improving a communication effect.

From step 302 to step 308, the low power card detection carrier of the card reader device is received by using the wake-up tuning coil, where the resonance point of the wake-up tuning coil is the same as the carrier frequency band of the card reader device. The wake-up induced magnetic field is generated by using the wake-up tuning coil when the low power card detection carrier of the card reader device is received, where the induced magnetic field is used to disable the low power card detection mode of the card reader device. The full power card detection carrier of the card reader device is received by using the communication antenna coil, where the communication antenna coil is connected to the NFC chip in series, and is tuned to the carrier frequency band of the card reader device. The communication induced magnetic field is generated by using the communication antenna coil when the full power card detection carrier of the card reader device is received, and communication with the card reader device is performed based on the communication induced magnetic field. This can solve a technical problem in a related technology that an NFC payment device is difficult to complete payment in cases without power supply. The wake-up tuning coil (a bare coil) is disposed in the passive near field communication device to wake up the card reader device in the low power card detection mode, and then full power communication is performed with the card reader device by using the communication antenna coil. In this way, payment can be completed in cases without power supply. Moreover, a coupling effect of the card reader device in the low power mode can be improved.

In some example embodiments, the receiving a low power card detection carrier of a card reader device by using a wake-up tuning coil includes:
receiving the low power card detection carrier of the card reader device by using a first wake-up tuning coil, where the first wake-up tuning coil and the communication antenna coil are co-planar or located on parallel planes, and induced magnetic fields within the two coils overlap.

Preferably, the first wake-up tuning coil and the communication antenna coil can be embedded in a parallel and encircled arrangement within the passive near field communication device.

According to the foregoing embodiments, the first wake-up tuning coil and the communication antenna coil are co-planar or located on parallel planes, and the induced magnetic fields within the two coils overlap. As such, the passive near field communication device can immediately communicate with the card reader device once it wakes up the card reader device, and in addition, a technical effect of space saving can be further achieved.

In some example embodiments, the first wake-up tuning coil is located in a middle portion or a lower half of the passive near field communication device, and is configured to be coupled with an antenna in a middle portion or a lower half of the card reader device.

For example, the card reader device can be a mainstream Android mobile phone, and for the card reader device of this type, an antenna is usually disposed at a position of the middle portion or the lower half of the device.

According to the foregoing embodiments, the first wake-up tuning coil is located in the middle portion or the lower half of the passive near field communication device, and is configured to be coupled with the antenna in the middle portion or the lower half of the card reader device, thereby improving convenience in coupling the passive near field communication device with a mainstream card reader device.

In some example embodiments, the first wake-up tuning coil has the same shape as a rectangular or oblate antenna of the card reader device.

For example, the card reader device can be an Android mobile phone, and for the card reader device of this type, an antenna is usually rectangular or oblate.

According to the foregoing embodiments, the first wake-up tuning coil has the rectangular or oblate shape, and is configured to be coupled with the rectangular or oblate antenna of the card reader device, thereby improving a coupling effect between the passive near field communication device and a mainstream card reader device.

In some example embodiments, the receiving a low power card detection carrier of a card reader device by using a wake-up tuning coil includes:
receiving, by using the second wake-up tuning coil, a low power card detection carrier sent by an antenna on an upper side of the card reader device, where the second wake-up tuning coil is located on an upper side of the passive near field communication device.

For example, the card reader device can be an iOS mobile phone, and for the card reader device of this type, an antenna is usually disposed on an upper side of the device.

According to the foregoing embodiments, the second wake-up tuning coil is located on the upper side of the passive near field communication device, and is configured to be coupled with the antenna on the upper side of the card reader device, thereby improving convenience in coupling the passive near field communication device with a card reader device of an iOS type.

In some example embodiments, the second wake-up tuning coil has the same shape as a strip-shaped antenna on an upper side of the card reader device.

For example, the card reader device can be an iOS mobile phone, and for the card reader device of this type, an antenna is usually strip-shaped for a card reader device of this type.

According to the foregoing embodiments, the first wake-up tuning coil has the strip shape, and is configured to be coupled with the strip-shaped antenna of the card reader device, thereby improving a coupling effect between the passive near field communication device and a card reader device of the iOS type.

According to another aspect of some embodiments of the present disclosure, a passive near field communication apparatus is further provided. FIG. 4 is a structural diagram of the passive near field communication apparatus according to some embodiments of the present disclosure. As shown in FIG. 4, the passive near field communication apparatus includes a first receiving module 401, a wake-up module 402, a second receiving module 403, and a communication module 404.

The first receiving module 401 is configured to receive a low power card detection carrier of a card reader device by using a wake-up tuning coil, where a resonance point of the wake-up tuning coil is the same as a carrier frequency band of the card reader device.

The wake-up tuning coil is a bare coil, and the bare coil can be an LC oscillator circuit that is not connected to the NFC chip in series. The card reader device can be a mobile phone with an NFC function.

The wake-up module 402 is configured to generate, by using the wake-up tuning coil, a wake-up induced magnetic field when the low power card detection carrier of the card reader device is received, where the induced magnetic field is used to disable a low power card detection mode of the card reader device.

The resonance point of the wake-up tuning coil and the carrier frequency band of the card reader device can be 13.56 MHz. After the low power card detection mode of the card reader device is disabled, the card reader device may enter a full power card detection mode.

The second receiving module 403 is configured to receive a full power card detection carrier of the card reader device by using a communication antenna coil, where the communication antenna coil is connected to an NFC chip in series, and is tuned to the carrier frequency band of the card reader device.

The card reader device may approach the wake-up tuning coil in the low power card detection mode, so as to induce the wake-up tuning coil to generate an induced magnetic field, thereby waking up the full power card detection mode of the card reader device.

The communication module 404 is configured to generate, by using the communication antenna coil, a communication induced magnetic field when the full power card detection carrier of the card reader device is received, and communicate with the card reader device based on the communication induced magnetic field.

Load modulation is performed by the NFC chip on the communication antenna coil, so as to complete the communication with the card reader device.

In the embodiments of the present disclosure, the wake-up tuning coil is a bare coil, and the resonance point of the wake-up tuning coil is the same as the carrier frequency band of the card reader device; the communication antenna coil is connected to the NFC chip in series, and is tuned to the carrier frequency band of the card reader device; the wake-up tuning coil is configured to be coupled with the antenna of the card reader device when the antenna of the card reader device approaches, and disable the low power card detection mode of the card reader device; and the communication antenna coil is configured to communicate with the card reader device in the full power card detection mode of the card reader device. This can solve a technical problem in a related technology that an NFC payment device cannot complete payment in cases without power supply. The wake-up tuning coil (a bare coil) is disposed in the passive near field communication device to wake up the card reader device in the low power card detection mode, and then full power communication is performed with the card reader device by using the communication antenna coil. In this way, payment can be completed in cases without power supply. Moreover, a coupling effect of the card reader device in the low power mode can be improved.

In some example embodiments, the first receiving module includes the following:
a first receiving unit, configured to receive the low power card detection carrier of the card reader device by using a first wake-up tuning coil, where the first wake-up tuning coil and the communication antenna coil are co-planar or located on parallel planes, and induced magnetic fields within the two coils overlap.

Preferably, the first wake-up tuning coil and the communication antenna coil can be embedded in a parallel and encircled arrangement within the passive near field communication device.

According to the foregoing embodiments, the first wake-up tuning coil and the communication antenna coil are co-planar or located on parallel planes, and the induced magnetic fields within the two coils overlap. As such, the passive near field communication device can immediately communicate with the card reader device once it wakes up the card reader device, and in addition, a technical effect of space saving can be further achieved.

In some example embodiments, the first wake-up tuning coil is located in a middle portion or a lower half of the passive near field communication device, and is configured to be coupled with an antenna in a middle portion or a lower half of the card reader device.

For example, the card reader device can be a mainstream Android mobile phone, and for the card reader device of this type, an antenna is usually disposed at a position of the middle portion or the lower half of the device.

According to the foregoing embodiments, the first wake-up tuning coil is located in the middle portion or the lower half of the passive near field communication device, and is configured to be coupled with the antenna in the middle portion or the lower half of the card reader device, thereby improving convenience in coupling the passive near field communication device with a mainstream card reader device.

In some example embodiments, the first wake-up tuning coil has the same shape as a rectangular or oblate antenna of the card reader device.

For example, the card reader device can be an Android mobile phone, and for the card reader device of this type, an antenna is usually rectangular or oblate.

According to the foregoing embodiments, the first wake-up tuning coil has the rectangular or oblate shape, and is configured to be coupled with the rectangular or oblate antenna of the card reader device, thereby improving a coupling effect between the passive near field communication device and a mainstream card reader device.

In some example embodiments, the first receiving module includes the following:
a second receiving unit, configured to receive, by using a second wake-up tuning coil, a low power card detection carrier sent by an antenna on an upper side of the card reader device, where the second wake-up tuning coil is located on an upper side of the passive near field communication device.

For example, the card reader device can be an iOS mobile phone, and for the card reader device of this type, an antenna is usually disposed on an upper side of the device.

According to the foregoing embodiments, the second wake-up tuning coil is located on the upper side of the passive near field communication device, and is configured to be coupled with the antenna on the upper side of the card reader device, thereby improving convenience in coupling the passive near field communication device with a card reader device of an iOS type.

In some example embodiments, the second wake-up tuning coil has the same shape as a strip-shaped antenna on an upper side of the card reader device.

For example, the card reader device can be an iOS mobile phone, and for the card reader device of this type, an antenna is usually strip-shaped for a card reader device of this type.

According to the foregoing embodiments, the first wake-up tuning coil has the strip shape, and is configured to be coupled with the strip-shaped antenna of the card reader device, thereby improving a coupling effect between the passive near field communication device and a card reader device of the iOS type.

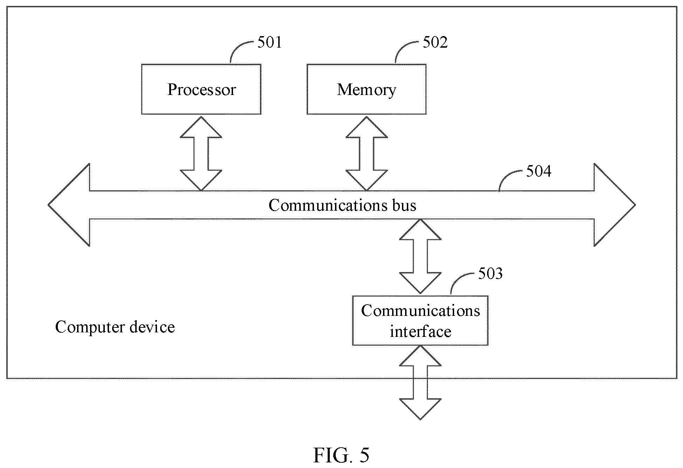

Some embodiments of the present disclosure further provide a computing device. FIG. 5 is a schematic structural diagram of the computing device according to some embodiments of the present disclosure. The computing device can implement all the steps in the passive near field communication method in the foregoing embodiments. The computing device specifically includes the following:
a processor 501, a memory 502, a communications interface 503, and a communications bus 504.

The processor 501, the memory 502, and the communications interface 503 complete mutual communication by using the communications bus 504. The communications interface 503 is configured to implement information transmission between related devices.

The processor 501 is configured to invoke a computer program in the memory 502, and when executing the computer program, the processor implements the passive near field communication method in the foregoing embodiments.

Optionally, in some embodiments, when executed by the processor, the computer program implement the following steps:
Step S1: Receive a low power card detection carrier of a card reader device by using a wake-up tuning coil, where a resonance point of the wake-up tuning coil is the same as a carrier frequency band of the card reader device.
Step S2: Generate, by using the wake-up tuning coil, a wake-up induced magnetic field when the low power card detection carrier of the card reader device is received, where the induced magnetic field is used to disable a low power card detection mode of the card reader device.
Step S3: Receive a full power card detection carrier of the card reader device by using a communication antenna coil, where the communication antenna coil is connected to an NFC chip in series, and is tuned to the carrier frequency band of the card reader device.
Step S4: Generate, by using the communication antenna coil, a communication induced magnetic field when the full power card detection carrier of the card reader device is received, and communicate with the card reader device based on the communication induced magnetic field.

Some embodiments of the present disclosure further provide a computer-readable storage medium. The computer-readable storage medium stores a computer program. In response to being executed by a processor, the computer program implements the operations of the foregoing passive near field communication method.

Some embodiments of the present disclosure further provide a computer program product. The computer program product includes a computer program, and when executed by a processor, the computer program implements the foregoing passive near field communication method.

Although the present disclosure provides the method operation steps as described in the embodiments and flowcharts, more or fewer operation steps can be included based on conventional or non-creative efforts. The step sequence listed in the embodiments is only one of a plurality of step execution sequences, and does not represent a unique execution sequence. When the steps are executed by an actual apparatus or a client product, the steps can be executed in parallel (by a parallel processor or a multi-thread processor) or according to the method sequence illustrated in the embodiments or the accompanying drawings.

A person skilled in the art should understand that the embodiments of this specification can be provided as methods, apparatuses (systems), or computer program products. Therefore, the embodiments of this specification can use a form of hardware only embodiments, software only embodiments, or embodiments with a combination of software and hardware. In addition, the present disclosure can use a form of a computer program product that is implemented on one or more computer-usable storage media (including but not limited to a disk storage, a CD-ROM, an optical storage, etc.) that include computer-usable program code.

The present disclosure is described with reference to the flowcharts and/or block diagrams of the methods, apparatuses (systems), and computer program products according to the embodiments of the present disclosure. It should be understood that computer program instructions can be used to implement each process and/or each block in the flowcharts and/or the block diagrams and a combination of a process and/or a block in the flowcharts and/or the block diagrams. These computer program instructions can be provided for a general-purpose computer, a dedicated computer, an embedded processor, or a processor of another programmable data processing device to generate a machine, so the instructions executed by the computer or the processor of the another programmable data processing device generate an apparatus for implementing a function specified in one or more processes in the flowcharts and/or in one or more blocks in the block diagrams.

These computer program instructions can also be stored in a computer-readable storage that can instruct a computer or another programmable data processing device to work in a specific manner, so that the instructions stored in the computer-readable storage can generate an artifact including an instruction apparatus, and the instruction apparatus can implement a function specified in one or more processes in the flowcharts and/or in one or more blocks in the block diagrams.

These computer program instructions can be loaded to the computer or the another programmable data processing device, so that a series of operations and steps are performed on the computer or the another programmable device, thereby generating computer-implemented processing. Therefore, the instructions executed on the computer or the another programmable device provide steps for implementing a function specified in one or more processes in the flowcharts and/or in one or more blocks in the block diagrams.

The embodiments in this specification are described in a progressive manner. For the same or similar parts of the embodiments, references can be made to the embodiments. Each embodiment focuses on a difference from other embodiments. Particularly, the system embodiments are similar to the method embodiments, and therefore are described briefly. For related parts, reference can be made to partial descriptions in the method embodiments. In this specification, relationship terms such as first and second are merely used to distinguish an entity or operation from another entity or operation, and do not necessarily require or imply that there is any such actual relationship or sequence between these entities or operations.

It should be noted that, the embodiments in the present disclosure and characteristics in the embodiments can be mutually combined in a case in which they do not conflict with each other. The present disclosure is not limited to any single aspect or any single embodiment, nor is it limited to any combination and/or permutation of these aspects and/or embodiments. Furthermore, each aspect and/or embodiment of the present disclosure can be used alone or in combination with one or more other aspects and/or embodiments thereof.

Finally, it should be noted that, the foregoing embodiments are only used to illustrate the technical solutions of the present disclosure, rather than constitute a limitation thereto. Although the present disclosure is described in detail with reference to the foregoing embodiments, it should be understood by a person of ordinary skill in the art that one may still modify the technical solutions described in the foregoing embodiments or equivalently replace some or all technical features therein; and these modifications or replacements do not make the essence of the corresponding technical solutions depart from the scope of the technical solutions of various embodiments of the present disclosure, and shall all fall within the scope of the claims and specification of the present disclosure.

## Claims

1. A passive near field communication device, comprising a wake-up tuning coil, a communication antenna coil, and an NFC chip, wherein
the wake-up tuning coil is a bare coil, and a resonance point of the wake-up tuning coil is the same as a carrier frequency band of a card reader device; and
the communication antenna coil is connected to the NFC chip in series, and is tuned to the carrier frequency band of the card reader device.

2. The passive near field communication device according to claim 1, wherein the wake-up tuning coil is configured to be coupled with an antenna of the card reader device when the antenna of the card reader device approaches, and disable a low power card detection mode of the card reader device; and
the communication antenna coil is configured to communicate with the card reader device in a full power card detection mode of the card reader device.

3. The passive near field communication device according to claim 1, wherein a location of the wake-up tuning coil is determined based on a location of an NFC antenna comprised in the card reader device.

4. The passive near field communication device according to claim 1, wherein the wake-up tuning coil comprises a first wake-up tuning coil, and the card reader device comprises a first card reader device; and
the first wake-up tuning coil is located in a middle portion or a lower half of the passive near field communication device, and is configured to be coupled with an antenna in a middle portion or a lower half of the first card reader device.

5. The passive near field communication device according to claim 4, wherein the first wake-up tuning coil and the communication antenna coil are co-planar or located on parallel planes, and induced magnetic fields within the two coils overlap.

6. The passive near field communication device according to claim 4, wherein the first wake-up tuning coil has a rectangular or oblate shape, and is configured to be coupled with a rectangular or oblate antenna of the card reader device.

7. The passive near field communication device according to claim 1 or 4, wherein the wake-up tuning coil comprises a second wake-up tuning coil; and the card reader device comprises a second card reader device; and
the second wake-up tuning coil is located on an upper side of the passive near field communication device, and is configured to be coupled with an antenna on an upper side of the second card reader device.

8. The passive near field communication device according to claim 7, wherein the second wake-up tuning coil has a strip shape, and is configured to be coupled with a strip-shaped antenna on an upper side of the card reader device.

9. A passive near field communication method, comprising:
receiving a low power card detection carrier of a card reader device by using a wake-up tuning coil, wherein a resonance point of the wake-up tuning coil is the same as a carrier frequency band of the card reader device;
generating, by using the wake-up tuning coil, a wake-up induced magnetic field based on the low power card detection carrier, wherein the wake-up induced magnetic field is used to disable a low power card detection mode of the card reader device;
receiving a full power card detection carrier of the card reader device by using a communication antenna coil, wherein the communication antenna coil is connected to an NFC chip in series, and is tuned to the carrier frequency band of the card reader device; and
generating, by using the communication antenna coil, a communication induced magnetic field in response to the full power card detection carrier, and communicating with the card reader device based on the communication induced magnetic field.

10. The passive near field communication method according to claim 9, wherein the card reader device comprises a first card reader device, and receiving a low power card detection carrier of a card reader device by using a wake-up tuning coil comprises the following:
receiving the low power card detection carrier of the card reader device by using the first wake-up tuning coil, wherein the first wake-up tuning coil is located in a middle portion or a lower half of a passive near field communication device, and is configured to be coupled with an antenna in a middle portion or a lower half of the first card reader device.

11. The passive near field communication method according to claim 10, wherein the first wake-up tuning coil and the communication antenna coil are co-planar or located on parallel planes, and induced magnetic fields within the two coils overlap.

12. The passive near field communication method according to claim 10 or 11, wherein the first wake-up tuning coil has the same shape as a rectangular or oblate antenna of the card reader device.

13. The passive near field communication method according to claim 9 or 10, wherein the card reader device comprises a second card reader device, and receiving a low power card detection carrier of a card reader device by using a wake-up tuning coil comprises the following:
receiving, by using the second wake-up tuning coil, a low power card detection carrier sent by an antenna on an upper side of the second card reader device, wherein the second wake-up tuning coil is located on an upper side of the passive near field communication device.

14. The passive near field communication method according to claim 13, wherein the second wake-up tuning coil has the same shape as a strip-shaped antenna on an upper side of the card reader device.

15. A passive near field communication apparatus, comprising:
a first receiving module, configured to receive a low power card detection carrier of a card reader device by using a wake-up tuning coil, wherein a resonance point of the wake-up tuning coil is the same as a carrier frequency band of the card reader device;
a wake-up module, configured to generate, by using the wake-up tuning coil, a wake-up induced magnetic field based on the low power card detection carrier, wherein the wake-up induced magnetic field is used to disable a low power card detection mode of the card reader device;
a second receiving module, configured to receive a full power card detection carrier of the card reader device by using a communication antenna coil, wherein the communication antenna coil is connected to an NFC chip in series, and is tuned to the carrier frequency band of the card reader device; and
a communication module, configured to generate, by using the communication antenna coil, a communication induced magnetic field in response to the full power card detection carrier, and communicate with the card reader device based on the communication induced magnetic field.

16. The passive near field communication apparatus according to claim 15, wherein the card reader device comprises a first card reader device, and the first receiving module comprises:
a first receiving unit, configured to receive the low power card detection carrier of the card reader device by using the first wake-up tuning coil, wherein the first wake-up tuning coil is located in a middle portion or a lower half of a passive near field communication device, and is configured to be coupled with an antenna in a middle portion or a lower half of the first card reader device.

17. The passive near field communication apparatus according to claim 16, wherein the first wake-up tuning coil and the communication antenna coil are co-planar or located on parallel planes, and induced magnetic fields within the two coils overlap.

18. The passive near field communication apparatus according to claim 16 or 17, wherein the first wake-up tuning coil has the same shape as a rectangular or oblate antenna of the card reader device.

19. The passive near field communication apparatus according to claim 15 or 16, wherein the card reader device comprises a second card reader device, and the first receiving module comprises:
a second receiving unit, configured to receive, by using the second wake-up tuning coil, a low power card detection carrier sent by an antenna on an upper side of the second card reader device, wherein the second wake-up tuning coil is located on an upper side of the passive near field communication device.

20. The passive near field communication apparatus according to claim 19, wherein the second wake-up tuning coil has the same shape as a strip-shaped antenna on an upper side of the card reader device.

21. A computing device, wherein the computing device comprises a processor adapted to implement instructions and a storage device, the storage device stores a plurality of instructions, and the instructions are adapted to be loaded and executed by the processor to perform the passive near field communication method according to any one of claims 9 to 14.

22. A computer-readable storage medium, wherein the computer-readable storage medium stores a computer program, and the computer program is configured to execute the passive near field communication method according to any one of claims 9 to 14.

23. A computer program product, wherein the computer program product comprises a computer program, and when executed by a processor, the computer program implements the passive near field communication method according to any one of claims 9 to 14.
